(19) Europäisches Patentamt
European Patent Office
Office européen des brevets

(11) **EP 3 178 597 B1**

(12) **EUROPÄISCHE PATENTSCHRIFT**

(45) Veröffentlichungstag und Bekanntmachung des Hinweises auf die Patenterteilung:
**22.05.2019 Patentblatt 2019/21**

(51) Int Cl.:
*B23K 9/20* (2006.01)     *B23K 9/08* (2006.01)
*B23K 31/12* (2006.01)     *B23K 9/095* (2006.01)
*B23K 9/073* (2006.01)

(21) Anmeldenummer: **16201752.9**

(22) Anmeldetag: **01.12.2016**

(54) **VERFAHREN UND VORRICHTUNG ZUM VERSCHWEISSEN EINES SCHWEISSELEMENTS MIT EINEM METALLISCHEN WERKSTÜCK**

METHOD AND APPARATUS FOR WELDING A WELDED ELEMENT

PROCÉDÉ ET DISPOSITIF DE SOUDAGE D'UN ÉLÉMENT DE SOUDURE À UNE PIÈCE À USINER MÉTALLIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.12.2015 DE 102015224303**

(43) Veröffentlichungstag der Anmeldung:
**14.06.2017 Patentblatt 2017/24**

(73) Patentinhaber: **Bolzenschweißtechnik Heinz Soyer GmbH**
**82237 Wörthsee (DE)**

(72) Erfinder: **JILG, Andreas Walter**
**81735 München (DE)**

(74) Vertreter: **Thun, Clemens**
**Mitscherlich PartmbB**
**Patent- und Rechtsanwälte**
**Sonnenstraße 33**
**80331 München (DE)**

(56) Entgegenhaltungen:
**EP-A2- 1 418 016          WO-A1-02/092271**
**DE-A1- 4 314 528          DE-A1- 10 136 992**
**DE-A1-102004 051 389     JP-A- H0 531 581**
**US-A- 5 406 044**

EP 3 178 597 B1

**Beschreibung**

Die vorliegende Erfindung betrifft ein Verfahren sowie eine Vorrichtung zum Verschweißen eines Schweißelements mit einem metallischen Werkstück mit Hilfe eines Lichtbogens. Insbesondere betrifft die Erfindung ein Schweißverfahren, bei dem der Lichtbogen magnetisch bewegt wird. Bei dem zu verschweißenden Schweißelement kann es sich insbesondere um einen Bolzen oder ein ringartiges Schweißelement handeln.

Aus EP 1 418 016 A2 ist eine Lichtbogen-Schweißvorrichtung zum Schweißen von metallischen Blechen, mit einer Haltevorrichtung zum Halten eines Bleches und mit einer Hubvorrichtung sowie einer Spannungsversorgungsvorrichtung bekannt. Zudem ist eine Magnetfelderzeugungsvorrichtung vorgesehen, die dazu ausgelegt ist den Lichtbogen entlang der Kontaktpunkte der zu schweißenden Bleche zu bewegen.

Das Schweißen mit magnetisch bewegtem Lichtbogen ist zudem aus der DE 10 2004 051 389 A1 der Anmelderin bekannt und bietet insbesondere den Vorteil, dass sich die Schweißenergie auf die gesamte Stirnfläche des zu verschweißenden Elements verteilen lässt. Dies ermöglicht unter anderem das Aufschweißen ringförmiger Schweißelemente, verbessert jedoch auch das Schweißverhalten nicht ringförmiger Schweißelemente wie z.B. Bolzen oder stirnseitig aufzuschweißende plattenförmige Schweißelemente. Aufgrund der optimierten Verteilung des Lichtbogens auf die gesamte Querschnittsfläche werden die benötigte Schweißenergie, die Größe des Schweißwulstes sowie die auftretenden Unregelmäßigkeiten des Schweißwulstes erheblich reduziert. Ein weiterer Vorteil des Schweißverfahrens mit magnetisch bewegtem Lichtbogen liegt in einer guten Kompensierung der Blaswirkung bei schwierigen (unsymmetrischen) Massebedingungen.

Bei der im oben zitierten Stand der Technik beschriebenen Vorgehensweise wird vorwiegend mit einer koaxial zur Schweißachse liegenden Magnetspule gearbeitet. Aufgrund unterschiedlicher Materialpaarungen zwischen Bolzen und Werkstück ist die Ausprägung des Magnetfeldes im Spalt zwischen Schweißelementstirnseite und Werkstück unterschiedlich gut ausgeprägt. Dies resultiert aus den unterschiedlichen magnetischen Leitfähigkeiten der eingesetzten Materialien (Bolzen/Werkstück) und der daraus resultierenden Ablenkung der Feldlinien. Aufgrund der im Stand der Technik verwendeten koaxialen Spule ist eine asymmetrische, der Blaswirkung entgegenwirkende Beeinflussung des Lichtbogens bei größeren Bolzendurchmessern nur schwer möglich. Es kann lediglich die Stromstärke und somit die Stärke des Magnetischen Flusses verändert werden. Das Magnetfeld hat hier durchaus eine kompensierende Wirkung, doch kann bei großen Schweißelementen und starker Blaswirkung einer asymmetrischen Lichtbogenausbildung nicht optimal entgegengewirkt werden.

Je größer das Schweißelement ist, desto wichtiger wird es, den Lichtbogen für eine bestimmte Zeit mittig unter dem Schweißelement zu halten. Eine koaxiale Spule ist jedoch prinzip-bedingt dazu ausgelegt, den Lichtbogen in Rotation zu versetzen. Die resultierende Rotationsfrequenz ergibt sich hierbei durch die Lichtbogenlänge, den Schweißstrom, das Schutzgas sowie den Strom durch die Magnetspule und kann dementsprechend nur in gewissen Grenzen beeinflusst werden.

Der vorliegenden Erfindung liegt die Aufgabenstellung zugrunde, die aus dem Stand der Technik bekannten Vorgehensweisen zum Verschweißen eines Schweißelements hinsichtlich der Möglichkeiten zur Beurteilung der Schweißqualität sowie der Qualität der erzielbaren Schweißverbindung zu verbessern.

Die Aufgabe wird durch ein Verfahren zum Verschweißen eines Schweißelements mit den Merkmalen des Anspruchs 1 sowie durch eine Schweißvorrichtung gemäß Anspruch 11 gelöst. Vorteilhafte Weiterbildungen der Erfindung sind Gegenstand der abhängigen Ansprüche.

Grundgedanke der erfindungsgemäßen Lösung ist es, während des Schweißvorgangs den Lichtbogen zu überwachen. Genau genommen ist erfindungsgemäß vorgesehen, mit Hilfe einer Einrichtung zur Positionsbestimmung während des Schweißvorgangs die Position des Lichtbogens zu bestimmen.

Es wird also erfindungsgemäß ein Verfahren zum Verschweißen eines Schweißelements, insbesondere eines Bolzens, mit einem metallischen Werkstück mittels eines Lichtbogens vorgeschlagen, wobei nach Zündung des Lichtbogens im Rahmen einer Hubzündung mit Hilfe einer Einrichtung zur Positionsbestimmung während des Schweißvorgangs die Position des Lichtbogens bestimmt wird, dadurch gekennzeichnet, dass abhängig von der während des Schweißvorgangs bestimmten Position des Lichtbogens eine Qualität der Schweißverbindung ermittelt wird. Ferner wird erfindungsgemäß eine Schweißvorrichtung zum Verschweißen eines Bolzens, mit einem metallischen Werkstück mittels eines Lichtbogens vorgeschlagen, wobei die Vorrichtung einen Bolzenhalter, der den Bolzen während des Schweißvorgangs hält und dazu ausgebildet ist, zum Zünden des Lichtbogens den Bolzen zunächst im Wesentlichen senkrecht zu der Überfläche des Werkstücks anzusetzen und anschließend um ein bestimmtes Abhubmaß von der Werkstückoberfläche abzuziehen, wobei die Vorrichtung ferner eine Einrichtung zur Bestimmung der Position des Lichtbogens während des Schweißvorgangs aufweist, welche dadurch gekennzeichnet ist, dass die Vorrichtung ferner eine Bewertungseinheit aufweist, welche dazu ausgebildet ist, auf Basis der während des Schweißvorgangs bestimmten Position des Lichtbogens eine Qualität der Schweißverbindung zu ermitteln eine Bewertungseinheit aufweist, welche dazu ausgebildet. Die Positionsbestimmung des Lichtbogens kann dabei insbesondere durch optische Sensoren realisiert werden, wie nachfolgend anhand der ausführlichen Erläuterung bevorzugter Ausführungsbeispiele näher ersichtlich wird, wobei vorzugsweise zusätzlich eine Überwachung der Lichtbogenspannung erfolgt, durch welche die Positionsbestimmung weiter optimiert werden kann.

Das Überwachen der Position des Lichtbogens eröffnet zahlreiche Möglichkeiten, bislang bestehende Schweißverfahren weiter zu optimieren. So kann in einem ersten Schritt durch die Positionsüberwachung verhältnismäßig einfach festgestellt werden, ob sich während des Schweißvorgangs der Lichtbogen auch tatsächlich an der vorgesehenen bzw. gewünschten Position befindet. D.h., eine entsprechende Überwachung der Position des Lichtbogens lässt Rückschluss auf die Qualität der erzielten Scheißverbindung zu.

Eine besonders vorteilhafte Weiterbildung der Erfindung besteht allerdings darin, die nunmehr zur Verfügung stehende Information hinsichtlich der Lichtbogenposition als Ausgangspunkt für eine geregelte Beeinflussung des Lichtbogens während des gesamten Schweißprozesses zu verwenden. D.h., der Lichtbogen wird bei dieser Variante der Weiterbildung nicht nur überwacht, sondern aktiv derart beeinflusst, dass er möglichst unmittelbar an einer bestimmten Position verharrt oder einem gewünschten Bewegungsmuster folgt. Hierzu ist ein entsprechendes Ablenkungssystem erforderlich, welches vorzugsweise aus mehreren ansteuerbaren Elektromagneten gebildet wird, die vorzugsweise am Umfang des Schweißelements verteilt angeordnet sind. Die Elektromagnete werden dann abhängig von der erfassten Position des Lichtbogens angesteuert, so dass dieser in der gewünschten Weise beeinflusst wird.

Wie nachfolgend ebenfalls noch näher erläutert wird, kann dabei eine Ansteuerung der Elektromagnete derart erfolgen, dass über die Schweißzeit hinweg gesehen eine gleichmäßige Verteilung der Lichtbogenposition erzielt wird. Alternativ hierzu wäre es allerdings auch denkbar, die Ansteuerung derart auszuführen, dass der Lichtbogen stationär in der Mitte des Schweißelements verharrt, sich auf einer zum Schweißelement konzentrischen Kreisbahn bewegt oder sich bezogen auf das Zentrum des Schweißelements pendelt unter verschiedenen Winkeln hin und her bewegt. Insbesondere mit Hilfe der zuletzt beschriebenen Bewegungsformen kann erreicht werden, dass auch eine größere zu verschweißende Fläche gleichmäßig mit dem Lichtbogen überstrichen wird und dementsprechend ein flächiges, lückenloses Verbinden von Schweißelement und Werkstück erzielt wird.

Die Anordnung der Elektromagneten kann dabei derart sein, dass sie sich im Wesentlichen parallel zur Schweißachse erstrecken. Alternativ hierzu wäre allerdings auch eine radiale Ausrichtung zur Schweißachse denkbar, wobei dann vorzugsweise zusätzlich ein im Wesentlichen parallel zur Schweißachse verlaufender sog. Feldformer vorgesehen ist.

Vorzugsweise sind die Komponenten zur Bestimmung der Lichtbogenposition sowie ggf. zur Beurteilung der Qualität der Schweißverbindung oder zum geregelten Ansteuern der Elektromagnete zur Beeinflussung der Lichtbogenposition in einen Schweißkopf oder eine Schweißpistole integriert.

Nachfolgend soll die Erfindung anhand der beiliegenden Zeichnung näher erläutert werden. Es zeigen:

Fig. 1              ein erstes Ausführungsbeispiel einer erfindungsgemäßen Schweißanordnung im Schnitt;

Fig. 2a und 2b       die Vorgehensweise zum Detektieren der Lichtbogenposition;

Fig. 3              eine schematische Darstellung zur Erläuterung des Konzepts der zusätzlichen Überwachung der Lichtbogenspannung;

Fig. 4 bis 6         verschiedene Möglichkeiten zum Erzeugen eines den Lichtbogen beeinflussenden Magnetfelds;

Fig. 7              eine Möglichkeit der Vorrichtung und Ansteuerung der Magnetfeldspulen;

Fig. 8a und 8b       eine Übersicht und Einzelschritte bei der Ansteuerung der Magnetfeldspulen zur Erzeugung eines in 45°-Schritten rotierenden Magnetfelds;

Fig. 9              den Verlauf der Steuerspannungen für Magnetfeldspulen zur Erzeugung eines Drehfelds;

Fig. 10a und 10b     Möglichkeiten zur Anordnung von Magneten für die Lichtbogenbeeinflussung;

Fig. 11 bis 13       die Beeinflussung des Lichtbogens zur Kompensation von Blaswirkung und

Fig. 14a bis 14h     konkrete Ausführungsbeispiele zur Modifizierung der Steuerspannungen von Magnetspulen im Falle unterschiedlicher Blaswirkungen.

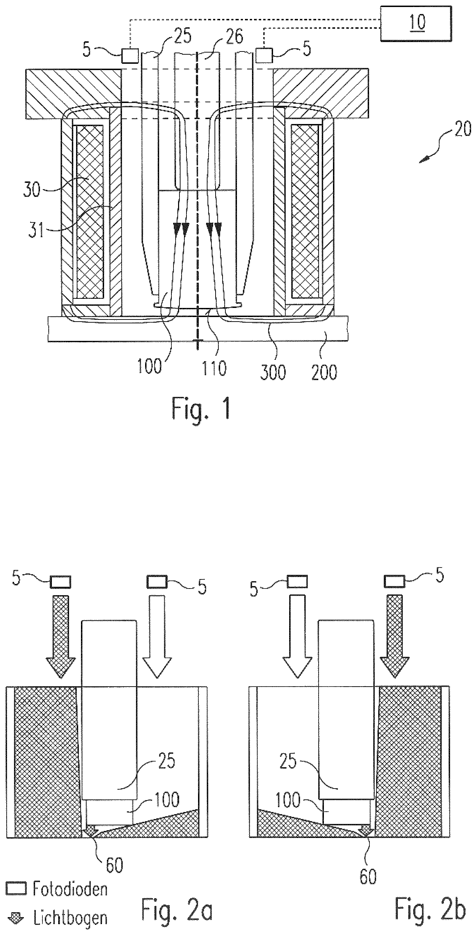

Der Grundgedanke der vorliegenden Erfindung, nämlich die Position des Lichtbogens während des Schweißvorgangs zu überwachen, soll zunächst anhand der Figuren 1 bis 3 erläutert werden.

Figur 1 zeigt hierbei zunächst den Querschnitt durch eine aus dem Stand der Technik im Wesentlichen bekannte Schweißvorrichtung, welche allgemein mit dem Bezugzeichen 20 versehen ist und dazu dient, ein Schweißelement, hier einen Schweißbolzen 100 mit einem Träger 200 bzw. allgemein einem Grundwerkstoff zu verschweißen. Bei dem dargestellten Schweißgerät 20 erfolgt das Verschweißen des Bolzens 100 mit dem Träger 200 im Rahmen einer sog. Hubzündung, bei der der Bolzen 100 zunächst im Wesentlichen senkrecht zu der Oberfläche des Trägers 200 angesetzt und anschließend um ein bestimmtes Abhubmaß von der Trägeroberfläche abgezogen wird. Aufgrund des - durch nicht näher dargestellte Mittel zum Anlegen eines Schweißstromes hervorgerufenen - hohen Potentialunterschieds zwischen dem Bolzen 100 und dem Träger 200 wird hierbei ein sog. Lichtbogen gezündet, durch den die Stirnfläche 110 des Bolzens 100 sowie der gegenüberliegende Bereich des Trägers 200 angeschmolzen wird. Um diese Hubzündung durchführen zu können, weist die dargestellte Vorrichtung 20 einen sog. Bolzenhalter 25 auf, der den Bolzen 100 während des Schweißvorgangs hält und die erforderlichen Hub-und Absenkbewegungen durchführt. Nach Beendigen des Schweißvorgangs wird der auf den Träger 200 aufgeschweißte Bolzen 100 abgestoßen, was mit Hilfe eines sich im Zentrum des Bolzenhalters 25 befindlichen Stößels 26 erzielt wird.

Die in Figur 1 dargestellte Vorrichtung ist dazu ausgelegt, ein den Lichtbogen beeinflussendes Magnetfeld zu erzielen, welches diesen veranlasst, die Stirnfläche 110 des Bolzens im Rahmen einer kreisförmigen Bewegung zu überstreichen. Dieses Magnetfeld wird im vorliegenden Fall mit einer von Gleichstrom durchflossenen ringförmigen Spule 30 erzeugt, welche das Magnetfeld 300 mit dem dargestellten Feldlinienverlauf erzeugt. Wesentlich ist, dass dieses Magnetfeld 300 im Bereich der Stirnfläche 110 des Bolzens 100 eine Querkomponente aufweist, durch welche der Lichtbogen während des Schweißvorgangs abgelenkt wird, um die oben erwähnte kreisförmige Laufbahn zu erzielen. Dieses Verfahren ist im Detail in der DE 10 2004 051 389 A1 der Anmelderin beschrieben. In gleicher Weise kommen allerdings derartige Magnetfelder auch beim Verschweißen ringartiger Schweißelemente zum Einsatz, da auch in diesem Fall mit Hilfe des Magnetfelds der Lichtbogen dazu veranlasst werden kann, im Rahmen einer Rotationsbewegung die Stirnfläche des Schweißelements zu überstreichen.

In den bislang beschriebenen Eigenschaften entspricht die in Figur 1 dargestellte Vorrichtung 20 den aus dem Stand der Technik bekannten Lösungen. Eine Besonderheit der in Figur 1 dargestellten Vorrichtung 20 besteht allerdings darin, dass diese zusätzlich nunmehr eine Einrichtung zur Positionsbestimmung des Lichtbogens aufweist. Im dargestellten Ausführungsbeispiel wird diese Einrichtung u.a. durch mehrere optische Sensoren 5 gebildet, die verteilt am Umfang des Bolzenhalters 25 angeordnet sind, derart, dass sie auf den ringförmigen Spalt zwischen Außenumfang des Bolzenhalters 25 und Innenumfang der Magnetspule 30 bzw. eines innerhalb von der Spule angeordneten Schutzrohrs 31 ausgerichtet sind. Die Sensoren 5 blicken also sozusagen in den Spaltbereich herab auf das Werkstück 200 im Bereich um den Bolzen 100 herum.

Während des Schweißvorgangs geben diese Sensoren 5 nunmehr ein Helligkeitssignal aus, welches von der Position des Lichtbogens an der Stirnfläche 110 des Bolzens 100 abhängig ist und von einer mit den Sensoren 5 verbundenen Auswerteeinheit 10 bewertet wird. Das entsprechende Prinzip ist in den Figuren 2a und 2b dargestellt, wobei hier das Signal zweier einander gegenüberliegender Fotodioden 5 betrachtet wird. Erkennbar ist hierbei, dass diejenige Fotodiode 5, die an dem Umfangsbereich des Schweißbolzens 100 angeordnet ist, in dessen Nähe sich der Lichtbogen 60 befindet, eine höhere Helligkeit erfasst. D.h., in Figur 2a, bei der der Lichtbogen 60 am linken Bereich des Bolzens 100 ausgebildet ist, erhält dementsprechend die linke Fotodiode 5 ein höheres Helligkeitssignal, während hingegen für den Fall, dass der Lichtbogen 60 - wie in Figur 2b dargestellt - sich eher an der rechten Seite befindet, nunmehr die rechte Fotodiode 5 ein höheres Signal ausgibt. Für den -nicht dargestellten - Fall, dass sich der Lichtbogen 60 zentral an der Stirnfläche des Bolzens 100 befindet, würden beide Fotodioden 5 in etwa das gleiche Helligkeitssignal liefern.

Werden nunmehr mehrere Fotodioden 5, zumindest jedoch drei verteilt am Umfang des Bolzenhalters 25 angeordnet, so kann durch entsprechendes Bewerten der von den Fotodioden 5 ausgegebenen Signale im Wesentlichen ohne zeitliche Verzögerung die aktuelle Position des Lichtbogens 60 ermittelt werden. Selbstverständlich erhöht eine höhere Anzahl von zum Einsatz kommenden Fotodioden 5 die Qualität der Positionsbestimmung, bereits drei Sensoren erlauben jedoch bereits grundsätzlich eine entsprechende Ermittlung der Lichtbogenposition.

Erkennbar ist anhand der Figuren 2a und 2b auch, dass in der Regel die Fotodioden 5 nicht unmittelbar auf den Lichtbogen 60 blicken, sondern stattdessen durch den Schweißbolzen 100 eine gewisse Abschattung erfolgt. Dies ist sogar von Vorteil, da eine unmittelbare bzw. direkte Beleuchtung der Fotodioden 5 durch den Lichtbogen 60 keine genauen Helligkeitsmessungen mehr ermöglichen würde. Die abgeschatteten Helligkeitssignale hingegen ermöglichen eine deutlich bessere Positionsbestimmung. Die in den Figuren 1 und 2 dargestellte Vorrichtung und Ausrichtung der Fotodioden 5 führt also sogar zu einer besseren Positionsbestimmung des Lichtbogens 60, wobei die Position letztendlich durch die Bewertungseinheit 10 (s. Figur 1) vorgenommen wird, welche die von den Fotodioden 5 ausgegebenen Signale erfasst und bewertet.

Anzumerken ist, dass alternativ zu den dargestellten optischen Sensoren bzw. Fotodioden eine Positionsbestimmung auch durch magnetische Sensoren denkbar wäre. Auch diese müssten wiederum am Umfang des Bolzens 100 verteilt angeordnet werden, da allerdings durch die Magnetspule oder die später noch näher beschriebenen Elektromagnete zur Beeinflussung der Position des Lichtbogens weitere starke Magnetfelder existieren, ist hier die Positionsbestimmung des Lichtbogens mit einem höheren Aufwand verbunden. Eine Positionsermittlung mit Hilfe der Fotodioden entsprechend dem oben beschriebenen Prinzip ist hingegen verhältnismäßig einfach und trotzallem zuverlässig durchzuführen.

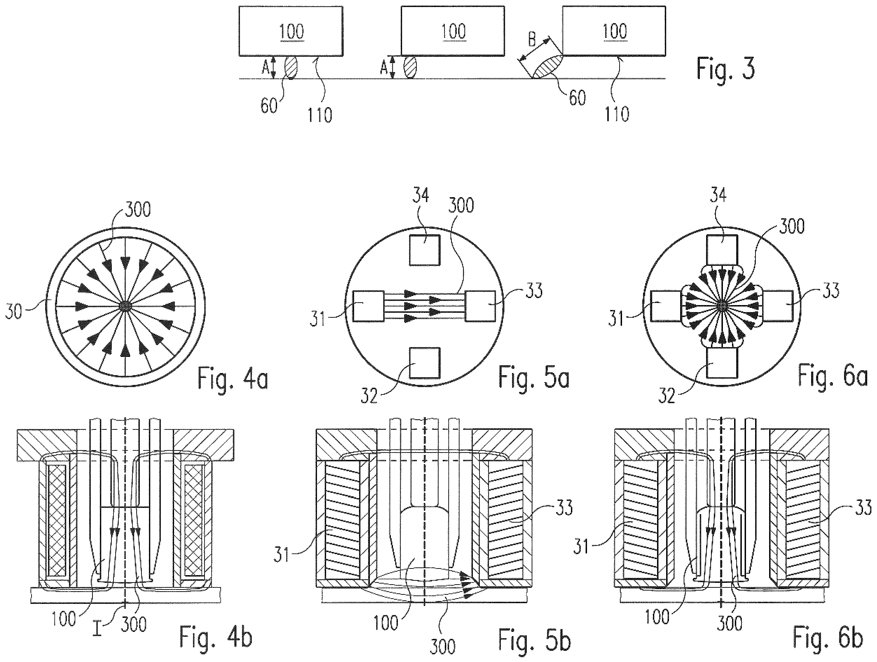

Dabei besteht auch die Möglichkeit, die soeben beschriebene Lichtbogenpositionsbestimmung durch eine zusätzliche Spannungsüberwachung zu optimieren, wobei das Prinzip hierzu in Figur 3 gezeigt ist.

Die Idee dieser ergänzenden Maßnahme ist, durch Messen der Spannung während des Schweißprozesses einer zu starken Auslenkung des Lichtbogens 60 entgegenzuwirken. Gezeigt sind hierzu drei unterschiedliche Positionen des Lichtbogens 60 bei unterschiedlich stark ausgeprägten Magnetfeldern. Die zuvor beschriebene Positionsbestimmung über die Intensitätsverteilung der Helligkeitssensoren 5 oder ggf. auch über Magnetsensoren ermöglicht insbesondere eine gute Erkennung des Winkels der Abweichung. Es ist zusätzlich möglich, anhand der Spannung das Überschreiten der Bolzenstirnfläche 110 durch den Lichtbogen 60 zu erkennen, da - wie in Figur 3 erkennbar - die Lichtbogenspannung mit der Länge des Lichtbogens ansteigt und dementsprechend ein starker Spannungsanstieg erkennbar ist, wenn der Lichtbogen 60 wie in Figur 3 rechts gezeigt derart stark abgelenkt wird, dass er von der Stirnfläche seitlich weggedrängt wird. Besonders bevorzugt wird also ergänzend zu der oben beschriebenen Positionsbestimmung zusätzlich auch die Lichtbogenspannung überwacht.

In einer Grundvariante der vorliegenden Erfindung erfolgt also in der zuvor beschriebenen Weise zunächst eine Bestimmung der Position des Lichtbogens 60 während des Schweißvorgangs. Die Überwachung dieser Position kann dann einen Rückschluss auf die Qualität der erzielten Schweißvorbindung ermöglichen. Bspw. kann bei der Schweißvorrichtung 20, wie sie in Figur 1 dargestellt ist und bei welcher der Lichtbogen 60 die Stirnfläche 110 des Schweißbolzens 100 spiralförmig überstreicht, davon ausgegangen werden, dass die Helligkeitssignale der Sensoren 5 einem bestimmten Muster folgen und bei optimaler Lichtbogenrotation auch im Wesentlichen Amplituden in etwa gleicher Höhe erfasst werden. Liefert hingegen einer der Sensoren 5 deutlich höhere Werte, so wäre dies ein Hinweis dafür, dass der Lichtbogen 60 während des Schweißvorgangs in Richtung des entsprechenden Sensors 5 verschoben war, also eine sog. Blaswirkung vorliegt, welche zu einer ungleichmäßigen Verschmelzung der Stirnfläche 110 des Bolzens 100 führt. D.h., entsprechende Messsignale wären ein Hinweis dafür, dass keine zufriedenstellende Schweißverbindung vorliegt.

In vergleichbarer Weise kann davon ausgegangen werden, dass bei einem "klassischen" Schweißvorgang mit stationärem Lichtbogen die Sensoren 5 über die Schweißdauer hinweg im Wesentlichen gleiche Helligkeitssignale liefern sollten, falls keine Blaswirkung vorliegt. Ein Versatz des Lichtbogens hingegen, der zu einer mangelhaften Schweißqualität führen würde, würde sich dadurch bemerkbar machen, dass zumindest einer der Sensoren 5 erhöhte Helligkeitssignale erfasst.

Gemäß einer ersten vorteilhaften Weiterbildung des grundsätzlichen Konzepts der Lichtbogenpositionsbestimmung kann also vorgesehen sein, dass durch Auswertung der gewonnenen Informationen hinsichtlich der Position des Lichtbogens während des Schweißvorganges eine Qualität der Schweißverbindung beurteilt wird.

Eine besonders vorteilhafte Weiterbildung der Erfindung besteht allerdings darin, dass abhängig von der erfassten Position des Lichtbogens dieser gezielt beeinflusst wird, um das Schweißergebnis zu optimieren. Voraussetzung hierfür ist, dass die Anordnung zum Erzeugen des Magnetfelds derart ausgeführt ist, dass der Lichtbogen gezielt beeinflusst werden kann. Entsprechende Maßnahmen hierzu sollen nachfolgend anhand der Figuren 4 bis 6 erläutert werden.

Diese Figuren zeigen unterschiedliche Ausführungsformen und Arten der Ansteuerungen von Elektromagneten sowie die daraus resultierenden Magnetfelder, wobei in den Figuren 4a bis 6a jeweils eine Aufsicht - also in Richtung der Längsachse des Bolzens - gezeigt ist und die Figuren 4b bis 6b jeweils die entsprechende Quer- bzw. Schnittansicht hierzu zeigen.

In den Figuren 4a und 4b ist dabei zunächst nochmals eine Spulenanordnung und deren Magnetfeldverlauf gezeigt, wie sie bei der Anordnung in Figur 1 vorliegt. Mit Hilfe der ringförmigen Magnetspule 30 wird also entsprechend der Darstellung ein Magnetfeld 300 erzielt, dessen Feldlinien im Bereich der Spule 30 parallel zur Längsachse I des Bolzens 100 verlaufen, am unteren und oberen Ende der Spule 30 hingegen die insbesondere in Figur 3a erkennbare Querkomponente bilden, da hier entweder die Feldlinien zum Zentrum hin oder - an dem gegenüberliegenden Ende - vom Zentrum nach außen verlaufen. Diese Querkomponente ist beispielsweise zum Erzielen der oben erwähnten Lichtbogenrotation erforderlich.

Zur erfindungsgemäßen gezielten Beeinflussung der Lichtbogenposition kommen nunmehr jedoch anstelle der einzelnen ringförmigen Spule gemäß der Figuren 4a und 4b stattdessen einzelne Magnete 31 bis 34 zum Einsatz, wie sie schematisch in den Figuren 5 und 6 dargestellt sind. Die Magnete 31 bis 34 sind also am Umfang verteilt parallel zur Längsachse des Bolzens 100 angeordnet und wiederum mit vier entsprechend ansteuerbaren Wicklungen (in der Draufsicht quadratisch dargestellt) ausgebildet, wobei nunmehr je nach Ansteuerung der Wicklungen Magnetfelder unterschiedlicher Formen erzielt werden können.

So ist zunächst in den Figuren 5a und 5b der Fall dargestellt, dass lediglich zwei einander gegenüberliegende Spulen 31 und 33 unterschiedlich bestromt werden. In diesem Fall ergibt sich der in den Figuren dargestellte Feldlinienverlauf 300, der also insbesondere im unteren Bereich eine entsprechende Querkomponente aufweist. Werden hingegen die Spulen 31 bis 34 wie in Figur 6a und 6b dargestellt identisch bestromt, so wird ein Magnetfeld 300 erzielt, welches starke Ähnlichkeit zu dem von der einzelnen ringförmigen Magnetspule in den Figuren 4a und 4b gebildeten Magnetfeld aufweist. In beiden Fällen wird jedoch ein Magnetfeld erzeugt, welches im Bereich zwischen Bolzen 100 und Werkstück eine Querkomponente aufweist, welche dazu geeignet ist, denn Lichtbogen 60 zu beeinflussen.

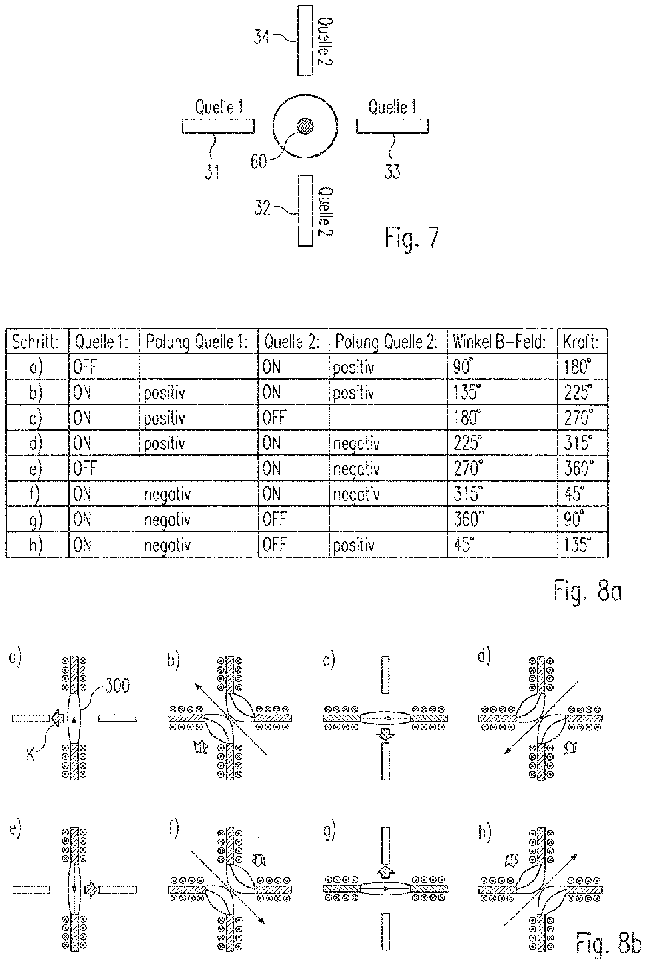

Untersuchungen haben nunmehr gezeigt, dass der Lichtbogen in den einzelnen Phasen des Schweißprozesses unter radialer Magnetfeldablenkung und Drehfeldablenkung unterschiedlich gut abgelenkt werden kann. Dementsprechend ist vorgesehen, den magnetischen Fluss in den einzelnen Phasen des Schweißprozesses in seiner Ausprägung speziell zu variieren, wobei nachfolgend zunächst anhand der Figuren 7, 8a und 8b das Erzeugen eines sog. Drehfelds näher erläutert werden soll.

Hierbei wird davon ausgegangen, dass - wie in Figur 7 dargestellt - vier am Umfang der Anordnung verteilt angeordnete Magnete 31 bis 34 vorgesehen sind, die jeweils paarweise seriell oder antiparallel miteinander verschaltet sind und von zwei nicht dargestellten Quellen mit Strom bzw. Spannung versorgt werden. Je nachdem, in welcher Weise die beiden Stromquellen und damit die zughörigen Magnetspulen 31 bis 34 bestromt werden sowie abhängig von der Polarität des Stroms bzw. der Spannung, ergibt sich dann ein entsprechender Verlauf der Magnetfeldlinien sowie eine entsprechende Richtung der hieraus resultierenden, auf den Lichtbogen 60 wirkenden Ablenktraft. Beispielhaft sind hierbei entsprechende Winkelabgaben für acht Situationen in der Tabelle von Figur 8a dargestellt, Figur 8b zeigt jeweils den entsprechenden Magnetfeldverlauf 300 sowie die zugehörige Richtung der Ablenkkraft K. Dabei wird davon ausgegangen, dass die Amplituden des Stroms bzw. der Spannung jeweils gleich hoch sind.

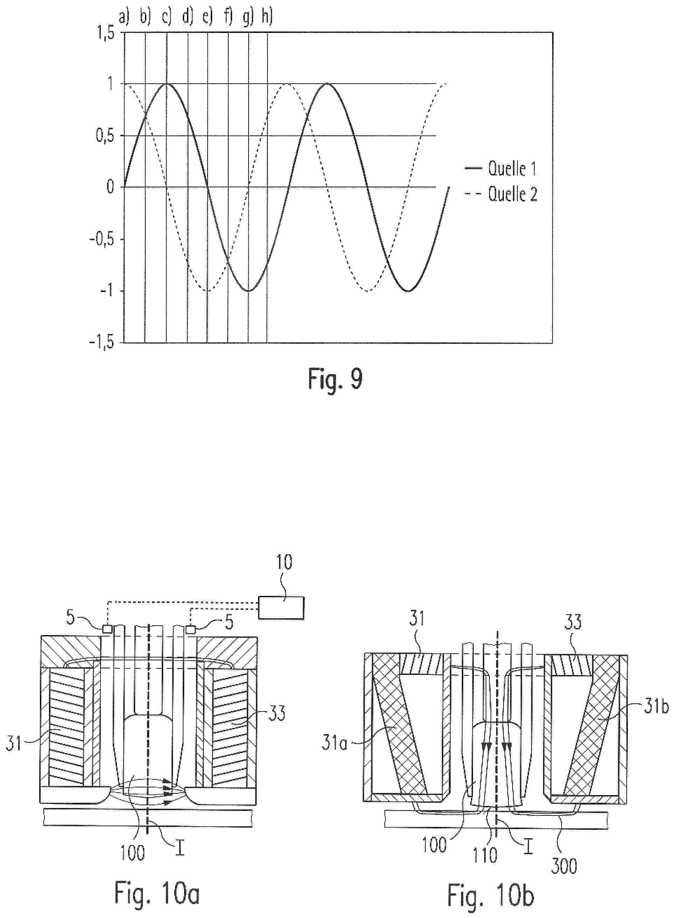

Werden also die beiden Stromquellen entsprechend den in Figur 8a dargestellten Schritten angesteuert, so ergibt sich ein in 45°-Schritten wanderndes bzw. rotierendes Magnetfeld 300, mit dessen Hilfe der Lichtbogen 60 beeinflusst werden kann. Vorzugsweise jedoch werden beide Stromquellen mit kontinuierlichen, sinusförmigen Signalen angesteuert, wie sie in Figur 9 dargestellt sind, so dass sich letztendlich ein kontinuierlich rotierendes Magnetfeld ergibt, welches in besonders effizienter Weise zum Beeinflussen des Lichtbogens genutzt werden kann. In Figur 9 sind hierbei zusätzlich auch die Zeitpunkte dargestellt, die den Schritten a) bis h) der Figuren 8a und 8b entsprechen.

Wie die Figuren 10a und 10b zeigen, können dabei die entsprechenden Magnete 31 bis 34 sowohl parallel zur Längsachse I des Bolzens 100 bzw. der Schweißvorrichtung 20 als auch senkrecht hierzu ausgerichtet sein. Figur 10a zeigt dabei den Fall einer parallelen Anordnung, die auch bereits in den Figuren 5 und 6 gezeigt war. Bei der in Figur 10b dargestellten Variante hingegen sind die Magnete 31 bis 34 senkrecht zur Längsachse I ausgerichtet und erstrecken sich dementsprechend in einer Ebene radial nach außen. In diesem Fall sind dann zusätzlich Feldformer 31a, 33a vorgesehen, welche sich im dargestellten Fall von den Endbereichen der Magnete 31 bis 34 ausgehend schräg nach unten erstrecken und die Magnetfeldlinien derart beeinflussen, dass wiederum im Bereich der Bolzenstirnfläche 110 die zur effektiven Beeinflussung des Lichtbogens 60 erforderlich Querkomponente für das Magnetfeld 300 erzielt wird.

Wesentlich ist nunmehr, dass unter Berücksichtigung der Position des Lichtbogens, die entsprechend den obigen Erläuterungen erfindungsgemäß detektiert wird, die Ansteuerung der einzelnen Magnete 31 bis 34 bzw. der zugehörigen Spulen derart beeinflusst werden kann, dass Abweichungen des Lichtbogens 60 von der Sollposition kompensiert werden können. Dies kann durch entsprechende Modifizierung der Stromstärke, mit der die Spulen bestromt werden, oder durch Beeinflussung der zeitlichen Ansteuerung erfolgen.

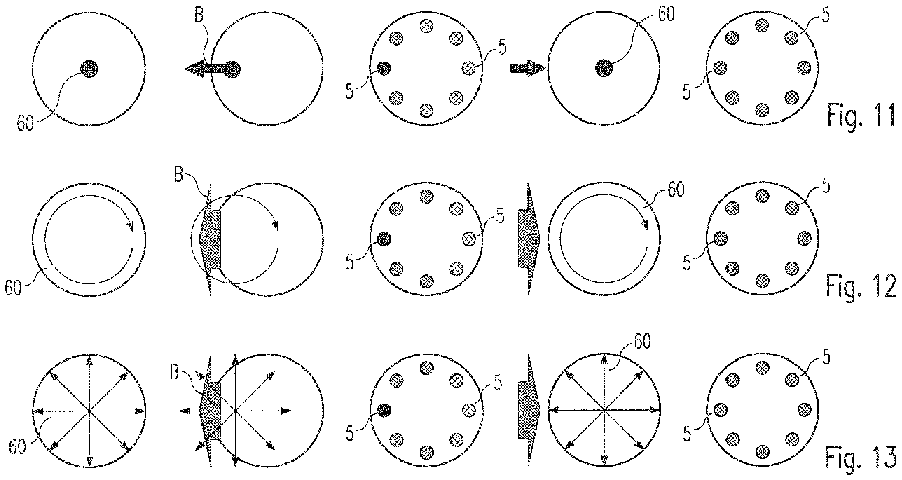

Das entsprechende Prinzip hierzu ist in den Figuren 11 bis 13 dargestellt. Dabei ist in der ersten Spalte von Figur 11 die über die Zeit hinweg gewünschte Lichtbogenbewegung dargestellt, wobei also in Figur 11 gewünscht ist, dass der Lichtbogen 60 dauerhaft bzw. stationär in der Mitte verharrt. Führt nunmehr allerdings die schematisch in der zweiten Spalte verdeutlichte sog. Blaswirkung B dazu, dass der Lichtbogen 60 seitlich abgelenkt wird, so wird dies durch das entsprechend höhere Signal des an dieser Position befindlichen Sensors 5 (dargestellt durch die unterschiedlichen Graustufen in der vierten Spalte) erkannt. Durch entsprechende Ansteuerung der Magnete 31 bis 34 wird nunmehr das den Lichtbogen 60 beeinflussende Magnetfeld derart modifiziert, dass der Lichtbogen 60 zurück in die Mitte gedrängt wird (vorletzte Spalte), bis letztendlich alle Sensoren 5 ein gleichartiges Ergebnis liefern (rechte Spalte). Für den dargestellten Fall bedeutet dies, dass mit Hilfe der Magneten eine Kraftkomponente erzeugt wird, die den Lichtbogen 60 wieder nach rechts drückt, was gemäß den Darstellungen der Figuren 8a und 8b durch negatives bestromen der Magnetspulen 32 und 34 erzielt werden kann. Die Amplitude des Stroms bzw. der Spannung kann dann z.B. im Rahmen einer Regelung derart eingestellt werden, dass der Lichtbogen 60 automatisch wieder im Zentrum verharrt.

Eine vergleichbare Vorgehensweise ist in Figur 12 dargestellt, wobei nunmehr der Lichtbogen 60 wie dargestellt rotieren soll. In diesem Fall führt die Blaswirkung B dazu, dass eine entsprechende seitliche Auslenkung des Lichtbogens 60 durch die zugehörigen Sensoren 5 erkannt wird, wobei dies wiederum durch eine entsprechende Beeinflussung des Magnetfelds kompensiert werden kann, bis alle Sensoren gleichartige Ergebnisse liefern.

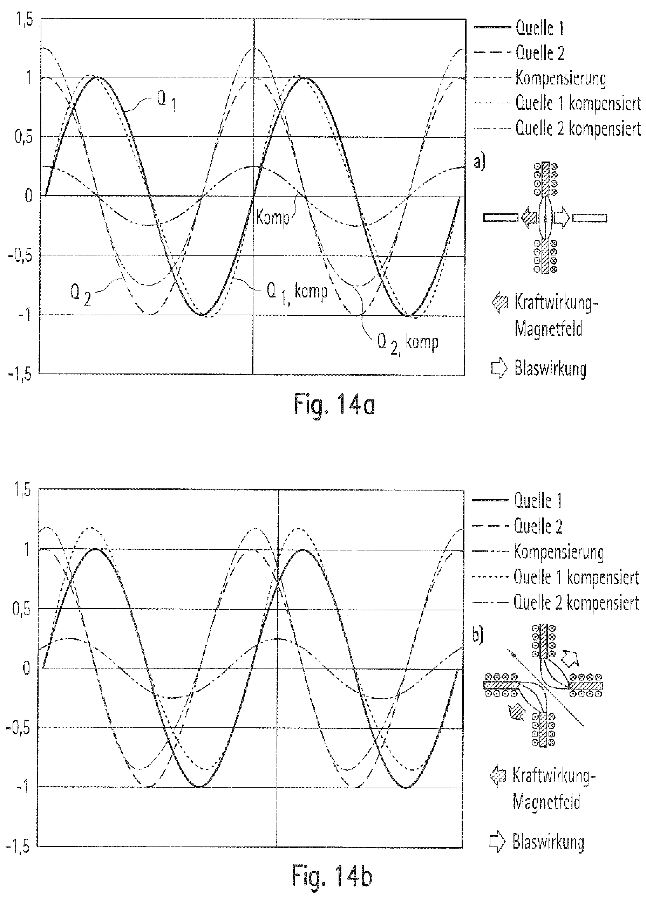

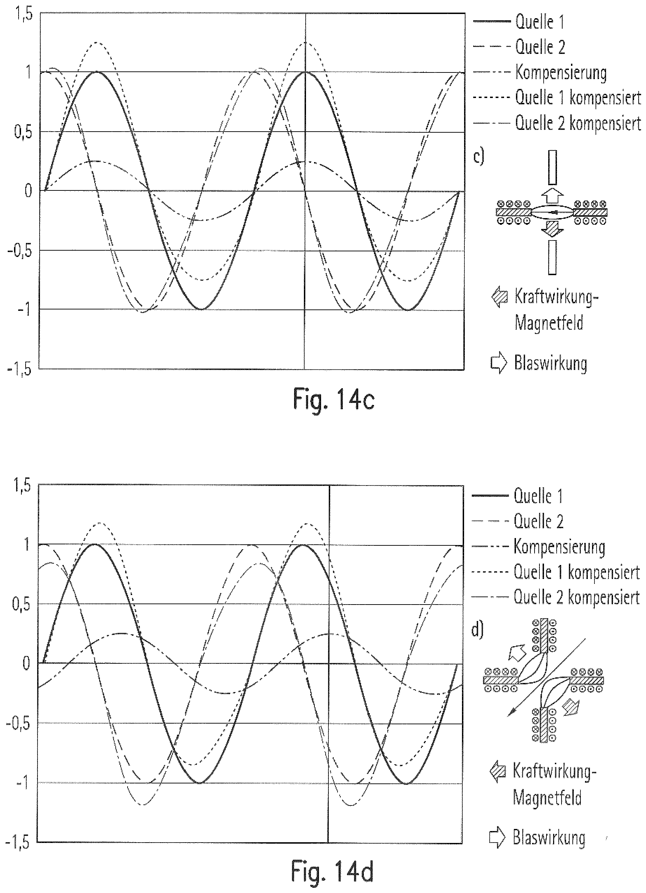

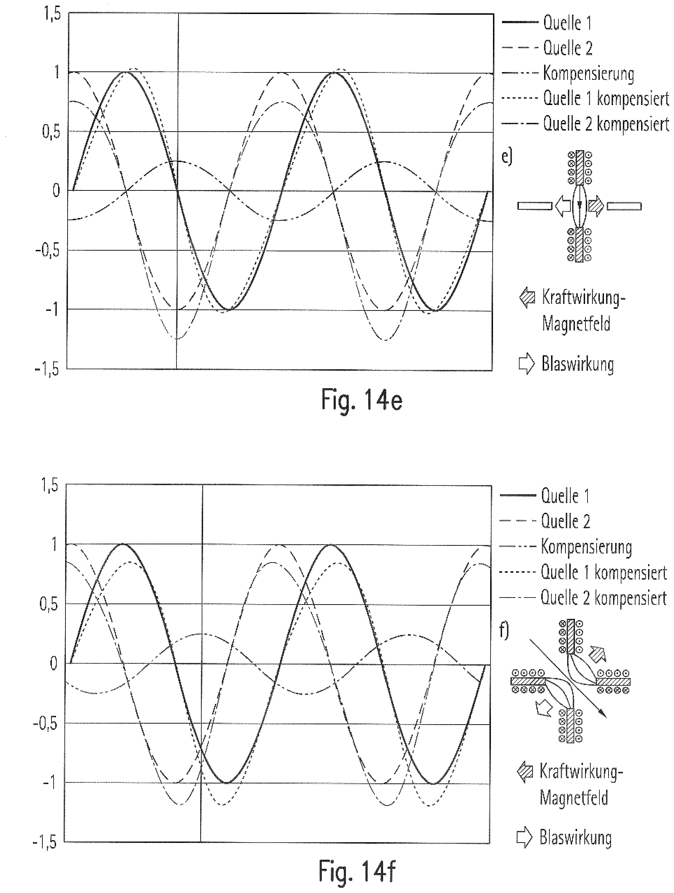

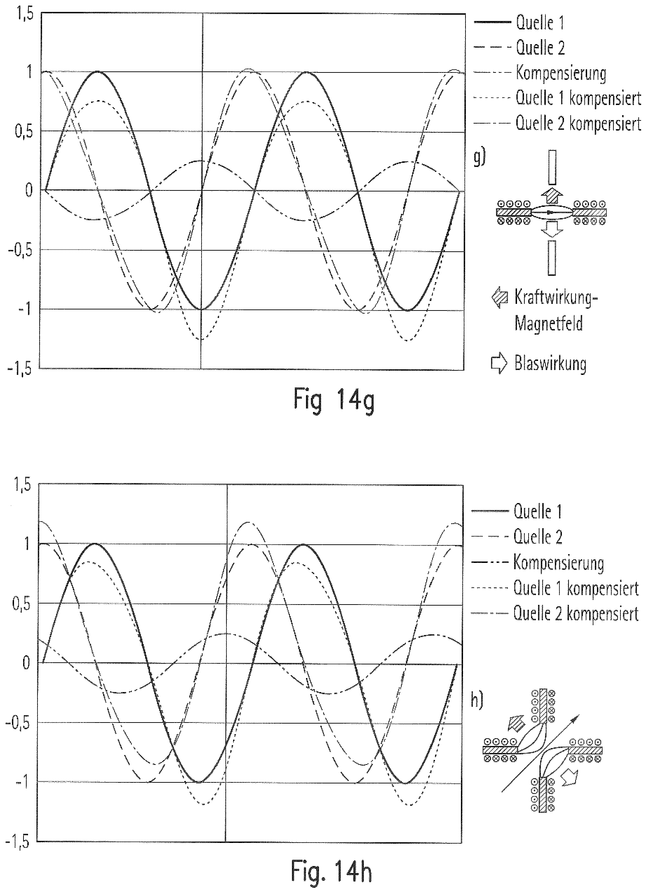

Beispiele, die zeigen, in welcher Weise das Magnetfeld gezielt modifiziert werden kann, um der Blaswirkung entgegenzuwirken, sind in den Figuren 14a bis 14h dargestellt, wobei nachfolgend anhand von Figur 14a explizit eine geeignete Magnetfeldkorrektur erläutert werden soll.

Dabei wird zunächst davon ausgegangen, dass - wie zuvor anhand der Figuren 7 bis 9 erläutert - beide Stromquellen mit zueinander versetzten Sinussignalen angesteuert werden sollen, um ein rotierendes Magnetfeld zu erzeugen, welches die gewünschte Lichtbogenrotation bewirkt. Wird nunmehr jedoch mit Hilfe der Sensoren 5 - sowie ggf. durch ergänzende Überwachung der Lichtbogenspannung - festgestellt, dass eine Blaswirkung vorliegt, welche den Lichtbogen nach rechts ablenkt, so können beide Stromquellen durch die dargestellte Kompensierungskurve kompensiert werden, so dass sich neue, sog. kompensierte Strom- bzw. Spannungswerte ergeben, die zusätzlich - also der eigentlichen Rotation überlagert - nunmehr für eine auf den Lichtbogen 60 wirkende Kraftkomponente sorgen, welche ihn wieder nach links in den gewünschten Bereich drängt.

Der Einfluss der dargestellten Kompensierungskurve auf die Strom- bzw. Spannungswerte $Q_1$ und $Q_2$ der Stromquellen ist wie folgt:

$$Q_{1,kopm.} = Q_1 \cdot (1 + Komp) \qquad \text{bzw.} \qquad Q_{2,kopm.} = Q_2 \cdot (1 + Komp)$$

Der Kompensationswert *Komp* bewirkt also eine gezielte, zeitabgängige Verstärkung oder Abschwächung des jeweiligen Strom- bzw. Spannungswerts der beiden Quellen, wobei beim Beispiel von Figur 14a die Beeinflussung derart ist, dass sie der Blaswirkung in geeigneter Weise entgegenwirkt.

Erkennbar ist bei dem Beispiel in Figur 14a im Übrigen auch, dass hier in erster Linie die Werte für die zweite Stromquelle kompensiert werden, während hingegen die Werte für die erste Quelle im Wesentlichen unverändert bleiben. Dies ist auch insofern nachvollziehbar, als hier eine Blaswirkung in einer Richtung vorliegt, für deren Beeinflussung in erster Linie die beiden in der Darstellung oben und unten gezeigt Magnete verantwortlich sind, welche durch die zweite Quelle betrieben werden.

Weitere Beispiele, die den unterschiedlichen Situationen der Figuren 8a bzw. 8b entsprechen, sind in den Figuren 14b bis 14h dargestellt, wobei wiederum die Richtung der Blaswirkung, die Kompensierungskurve und die sich hieraus ergebenden kompensierten Strom- bzw. Spannungswerte erkennbar sind.

Erkennbar ist also, dass die Kompensierungskurve grundsätzlich sinusförmig bzw. sinus-artig mit einer Periode ist, die der Periode der Signale für die beiden Stromquellen entspricht, wobei der Phasenwinkel der Kompensierungskurve von der Blaswirkungsrichtung bzw. der Richtung der angestrebten Korrektur für die Lichtbogenposition abhängig ist. Die Amplitude der Kompensierungskurve wiederum hängt von der Stärke der Blaswirkung ab.

Anzumerken ist, dass die Figuren 14a bis 14h ein besonders bevorzugtes Ausführungsbeispiel für eine Modifizierung der Strom- bzw. Spannungswerte für die Magnetspulen zeigt, welches sich als besonderes effizient zur Korrektur der Lichtbogenposition herausgestellt hat. Allerdings wären auch durchaus andere Vorgehensweisen zur geeigneten Beeinflussung der Lichtbogenposition denkbar, bei denen die Strom- bzw. Spannungswerte für die Magnetspulen in anderer Weise modifiziert werden.

Figur 13 schließlich zeigt den Fall, dass der Lichtbogen 60 in verschiedenen Winkeln über die stirnseitige Oberfläche des Bolzens pendeln soll. Auch in diesem Fall kann analog zu den oben beschriebenen Vorgehensweisen das Magnetfeld in geeigneter Weise beeinflusst werden, um einer unerwünschten Blaswirkung entgegenzuwirken.

Letztendlich kann also durch eine gezielte Ansteuerung der Magnete einerseits der Lichtbogen in ein bestimmtes gewünschtes Bewegungsmuster gezwängt werden. Andererseits kann durch Auswertung der Sensorinformationen sowie ggf. einer ergänzende Spannungsüberwachung eine Abweichung von der vorgesehenen Bewegung erkannt und bewegungstechnisch entsprechend ausgeglichen werden. D.h., die Qualität der letztendlich erzielbaren Schweißverbindung kann mit Hilfe der erfindungsgemäßen Maßnahmen deutlich erhöht werden.

Insgesamt bietet also die vorliegende Erfindung gegenüber aus dem Stand der Technik bekannten Lösungen die Möglichkeit einer zuverlässigen Erkennung der Position des Lichtbogens während des Schweißvorgangs. Hierdurch kann nicht nur die Qualität der Schweißverbindung beurteilt werden sondern es besteht darüber hinaus auch die Möglichkeit, aktiv Einfluss auf den Lichtbogen zu nehmen. Ungewünschte Ablenkungen des Lichtbogens können hierdurch ausgeglichen und damit die Qualität der Schweißverbindung effizient optimiert werden.

**Patentansprüche**

1. Verfahren zum Verschweißen eines Schweißelements (100), insbesondere eines Bolzens, mit einem metallischen Werkstück (200) mittels einem Lichtbogen (60), wobei nach Zündung des Lichtbogens (60) im Rahmen einer Hubzündung mit Hilfe einer Einrichtung zur Positionsbestimmung während des Schweißvorgangs die Position des Lichtbogens (60) bestimmt wird,

   **dadurch gekennzeichnet,**

   **dass** abhängig von der während des Schweißvorgangs bestimmten Position des Lichtbogens (60) eine Qualität der Schweißverbindung ermittelt wird.

**2.** Verfahren nach Anspruch 1,
**dadurch gekennzeichnet,**
**dass** die Einrichtung zur Positionsbestimmung des Lichtbogens (60) durch optische Sensoren (5) realisiert ist.

**3.** Verfahren nach Anspruch 2,
**dadurch gekennzeichnet,**
**dass** zusätzlich zur Positionsbestimmung mittels optischer Sensoren (5) eine Überwachung der Lichtbogenspannung erfolgt.

**4.** Verfahren nach einem der vorherigen Ansprüche,
**dadurch gekennzeichnet,**
**dass** das Verschweißen mittels eines magnetisch beeinflussten Lichtbogens (60) erfolgt,
wobei ein lichtbogenbeeinflussender magnetischer Fluss (300) mit Hilfe von mehreren ansteuerbaren Elektromagneten (31-34) gebildet wird, welche vorzugsweise am Umfang des Schweißelements (100) verteilt angeordnet sind, und wobei die Elektromagnete (31-34) abhängig von der erfassten Position des Lichtbogens (60) angesteuert werden.

**5.** Verfahren nach Anspruch 4,
**dadurch gekennzeichnet,**
**dass** die Elektromagnete (31-34) derart angesteuert werden, dass

a) eine über die Schweißzeit gleichmäßige Verteilung der Lichtbogenposition erzielt wird,
b) der Lichtbogen (60) stationär in der Mitte des Schweißelementes (100) verharrt,
c) der Lichtbogen (60) er sich auf einer zum Schweißelement (100) konzentrischen Kreisbahn bewegt oder
d) der Lichtbogen (60) sich bezogen auf das Zentrum des Schweißelementes (100) pendelnd unter verschiedenen Winkeln hin und her bewegt.

**6.** Verfahren nach Anspruch 4 oder 5,
**dadurch gekennzeichnet,**
**dass** die Spulen der Elektromagnete (31-34) derart angesteuert werden, dass sich ein bezüglich der Werkstückoberfläche parallel verlaufendes Dreheld oder ein radial verlaufendes Gleichfeld ergibt.
wobei vorzugsweise die Spulen der Elektromagnete (31-34) sinus-artig angesteuert werden.

**7.** Verfahren nach Anspruch 6,
**dadurch gekennzeichnet,**
**dass** abhängig von einer erkannten Abweichung des Lichtbogens (60) die Ansteuerung der Spulen der Elektromagnete (31-34) mit einer Kompensierungsfunktion modifiziert wird,
wobei vorzugsweise die Kompensierungsfunktion ebenfalls einen sinus-artigen Verlauf aufweist, dessen Phasenwinkel von der Richtung und dessen Amplitude von der Intensität der Abweichung des Lichtbogens (60) abhängig ist.

**8.** Vorrichtung zum Verschweißen eines Bolzens mit einem metallischen Werkstück (200) mittels einem Lichtbogen (60),
aufweisend einen Bolzenhalter (25), der den Bolzen (100) während des Schweißvorgangs hält und dazu ausgebildet ist, zum Zünden des Lichtbogens den Bolzen (100) zunächst im Wesentlichen senkrecht zu der Oberfläche des Werkstücks (200) anzusetzen und anschließend um ein bestimmtes Abhubmaß von der Werkstückoberfläche abzuziehen,
wobei die Vorrichtung ferner eine Einrichtung zur Bestimmung der Position des Lichtbogens (60) während des Schweißvorgangs aufweist,
**dadurch gekennzeichnet,**
**dass** die Vorrichtung ferner eine Bewertungseinheit aufweist, welche dazu ausgebildet ist, auf Basis der während des Schweißvorgangs bestimmten Position des Lichtbogens (60) eine Qualität der Schweißverbindung zu ermitteln.

**9.** Vorrichtung nach Anspruch 8,
**dadurch gekennzeichnet,**
**dass** die Einrichtung zur Positionsbestimmung optische Sensoren (5) aufweist.

**10.** Vorrichtung nach Anspruch 9,
**dadurch gekennzeichnet,**

**dass** die Einrichtung zur Positionsbestimmung zusätzlich Mittel zur Überwachung der Lichtbogenspannung aufweist.

11. Vorrichtung nach einem der Ansprüche 8 bis 10,
    **dadurch gekennzeichnet,**
    **dass** diese mehrere ansteuerbare Elektromagnete (31-34) zum Erzeugen eines lichtbogenbeeinflussenden magnetischen Flusses aufweist, welche vorzugsweise am Umfang des Schweißelements (100) verteilt angeordnet sind, wobei die Vorrichtung ferner eine Steuereinheit aufweist, welche dazu ausgebildet ist, die Elektromagnete (31-34) abhängig von der erfassten Position des Lichtbogens (60) anzusteuern.

12. Vorrichtung nach Anspruch 11,
    **dadurch gekennzeichnet,**
    **dass** die Elektromagnete (31-34)

    a) sich im Wesentlichen parallel zur Schweißachse erstrecken oder
    b) radial zur Schweißachse ausgerichtet sind und zusätzlich ein im Wesentlichen parallel zur Schweißachse verlaufender Feldformer vorgesehen ist.

13. Vorrichtung nach einem der Ansprüche 8 bis 12,
    **dadurch gekennzeichnet,**
    **dass** die Einrichtung zur Bestimmung der Position des Lichtbogens (60) sowie vorzugsweise eine Steuereinheit zum Ansteuern von Elektromagneten (31-34) zum Erzeugen eines lichtbogenbeeinflussenden magnetischen Flusses gemeinsam in einen Schweißkopf oder eine Schweißpistole integriert sind.

## Claims

1. Method for welding a welding element (100), in particular a stud, to a metallic workpiece (200) by means of an arc (60), wherein after ignition of the arc (60) in the context of lifting ignition, the position of the arc (60) is determined with the aid of a device for position determination during the welding process,
   **characterized**
   **in that** a quality of the welded joint is ascertained depending on the position of the arc (60) determined during the welding process.

2. Method according to Claim 1,
   **characterized**
   **in that** the device for position determination of the arc (60) is realised by optical sensors (5).

3. Method according to Claim 2,
   **characterized**
   **in that** the arc voltage is monitored in addition to the position determination by means of optical sensors (5).

4. Method according to any of the preceding claims, **characterized**
   **in that** the welding is carried out by means of a magnetically influenced arc (60),
   wherein an arc-influencing magnetic flux (300) is formed with the aid of a plurality of driveable electromagnets (31-34), which are preferably arranged in a distributed manner at the circumference of the welding element (100), and wherein the electromagnets (31-34) are driven depending on the detected position of the arc (60).

5. Method according to Claim 4,
   **characterized**
   **in that** the electromagnets (31-34) are driven in such a way that

   a) a distribution of the arc position that is uniform over the welding time is obtained,
   b) the arc (60) remains in the centre of the welding element (100) in a stationary manner,
   c) the arc (60) moves on a circular path that is concentric with respect to the welding element (100), or
   d) the arc (60) moves back and forth in an oscillating manner at different angles relative to the centre of the welding element (100).

6. Method according to Claim 4 or 5,

**characterized**

**in that** the coils of the electromagnets (31-34) are driven in such a way that a rotary field extending parallel relative to the workpiece surface or a radially extending DC field arises, wherein the coils of the electromagnets (31-34) are preferably driven in a sine-like manner.

7. Method according to Claim 6,
   **characterized**
   **in that** depending on an identified deviation of the arc (60), the driving of the coils of the electromagnets (31-34) is modified with a compensation function,
   wherein the compensation function preferably likewise has a sine-like profile, the phase angle of which is dependent on the direction and the amplitude of which is dependent on the intensity of the deviation of the arc (60).

8. Apparatus for welding a stud to a metallic workpiece (200) by means of an arc (60),
   comprising a stud holder (25), which holds the stud (100) during the welding process and is configured, for the purpose of igniting the arc, firstly to place the stud (100) substantially perpendicular to the surface of the workpiece (200) and then to draw it away from the workpiece surface by a specific lifting amount,
   wherein the apparatus furthermore comprises a device for determining the position of the arc (60) during the welding process,
   **characterized**
   **in that** the apparatus furthermore comprises an evaluation unit configured to ascertain a quality of the welded joint on the basis of the position of the arc (60) determined during the welding process.

9. Apparatus according to Claim 8,
   **characterized**
   **in that** the device for position determination comprises optical sensors (5).

10. Apparatus according to Claim 9,
    **characterized**
    **in that** the device for position determination additionally comprises means for monitoring the arc voltage.

11. Apparatus according to any of Claims 8 to 10,
    **characterized**
    **in that** it comprises a plurality of driveable electromagnets (31-34) for generating an arc-influencing magnetic flux, which electromagnets are preferably arranged in a distributed manner at the circumference of the welding element (100),
    wherein the apparatus furthermore comprises a control unit configured to drive the electromagnets (31-34) depending on the detected position of the arc (60).

12. Apparatus according to Claim 11,
    **characterized**
    **in that** the electromagnets (31-34)

    a) extend substantially parallel to the welding axis or
    b) are aligned radially with respect to the welding axis and a field shaper extending substantially parallel to the welding axis is additionally provided.

13. Apparatus according to any of Claims 8 to 12, **characterized**
    **in that** the device for determining the position of the arc (60) and preferably a control unit for driving electromagnets (31-34) for generating an arc-influencing magnetic flux are jointly integrated into a welding head or a welding gun.

**Revendications**

1. Procédé de soudage d'un élément à souder (100), notamment un boulon, avec une pièce métallique (200) au moyen d'un arc électrique (60), la position de l'arc électrique (60) étant déterminée pendant l'opération de soudage après l'amorçage de l'arc électrique (60) dans le cadre d'un amorçage par arc tiré à l'aide d'un dispositif de détermination de la position, **caractérisé en ce qu'**une qualité de l'assemblage soudé est identitifée en fonction de la position de l'arc électrique (60) déterminée pendant l'opération de soudage.

**2.** Procédé selon la revendication 1, **caractérisé en ce que** le dispositif de détermination de la position de l'arc électrique (60) est réalisé par des capteurs optiques (5).

**3.** Procédé selon la revendication 2, **caractérisé en ce qu'**une surveillance de la tension d'arc est effectuée en plus de la détermination de la position au moyen des capteurs optiques (5).

**4.** Procédé selon l'une des revendications précédentes, **caractérisé en ce que** le soudage est effectué au moyen d'un arc électrique (60) sous influence magnétique, un flux magnétique (300) qui influence l'arc électrique étant formé à l'aide de plusieurs électroaimants (31-34) excitables, lesquels sont de préférence disposés distribués sur le pourtour de l'élément à souder (100), et les électroaimants (31-34) étant excités en fonction de la position détectée de l'arc électrique (60).

**5.** Procédé selon la revendication 4, **caractérisé en ce que** les électroaimants (31-34) sont excités de telle sorte que

a) une distribution de la position de l'arc électrique régulière sur la durée du soudage est obtenue,
b) l'arc électrique (60) reste stationnaire au centre de l'élément à souder (100),
c) l'arc électrique (60) se déplace sur une trajectoire concentrique par rapport à l'élément à souder (100) ou
d) l'arc électrique (60) effectue un mouvement de va-et-vient oscillant sous différents angles par rapport au centre de l'élément à souder (100).

**6.** Procédé selon la revendication 4 ou 5, **caractérisé en ce que** les bobines des électroaimants (31-34) sont excitées de telle sorte qu'il se produit un champ rotatif s'étendant parallèlement à la surface de la pièce ou un champ continu s'étendant dans le sens radial, les bobines des électroaimants (31-34) étant de préférence excitées de manière sinusoïdale.

**7.** Procédé selon la revendication 6, **caractérisé en ce que** l'excitation des bobines des électroaimants (31-34) est modifiée avec une fonction de compensation en fonction d'un écart reconnu de l'arc électrique (60), la fonction de compensation possédant également de préférence un tracé de type sinusoïdal dont l'angle de phase est dépendant de la direction et dont l'amplitude de l'intensité de l'écart de l'arc électrique (60).

**8.** Arrangement de soudage d'un boulon avec une pièce métallique (200) au moyen d'un arc électrique (60), possédant un élément de maintien de boulon (25) qui maintient le boulon (100) pendant l'opération de soudage et qui est configuré, en vue d'amorcer l'arc électrique, pour placer le boulon (100) tout d'abord sensiblement perpendiculairement à la surface de la pièce (200) et ensuite le retirer de la surface de la pièce d'une cote de levage définie, l'arrangement possédant en outre un dispositif de détermination de la position de l'arc électrique (60) pendant l'opération de soudage, **caractérisé en ce que** l'arrangement possède en outre une unité d'évaluation qui est configurée pour identifier une qualité de l'assemblage soudé en se basant sur la position de l'arc électrique (60) déterminée pendant l'opération de soudage.

**9.** Arrangement selon la revendication 8, **caractérisé en ce que** le dispositif de détermination de la position possède des capteurs optiques (5).

**10.** Arrangement selon la revendication 9, **caractérisé en ce que** le dispositif de détermination de la position possède en outre des moyens de surveillance de la tension d'arc.

**11.** Arrangement selon l'une des revendications 8 à 10, **caractérisé en ce que** celui-ci possède plusieurs électroaimants (31-34) excitables destinés à générer un flux magnétique qui influence l'arc électrique, lesquels sont de préférence disposés distribués sur le pourtour de l'élément à souder (100), l'arrangement possédant en outre une unité de commande qui est configurée pour exciter les électroaimants (31-34) en fonction de la position détectée de l'arc électrique (60).

**12.** Arrangement selon la revendication 11, **caractérisé en ce que** les électroaimants (31-34)

a) s'étendent sensiblement parallèlement à l'axe de soudage ou
b) sont orientés radialement par rapport à l'axe de soudage et un configurateur de champ qui s'étend sensiblement parallèlement à l'axe de soudage est en plus présent.

**13.** Arrangement selon l'une des revendications 8 à 12, **caractérisé en ce que** le dispositif de détermination de la position de l'arc électrique (60) ainsi que de préférence une unité de commande destinée à exciter les électroaimants (31-34) en vue de générer un flux magnétique qui influence l'arc électrique sont intégrés en commun dans une tête de soudage ou un pistolet de soudage.

Fig. 1

☐ Fotodioden
⬦ Lichtbogen

Fig. 2a

Fig. 2b

Fig. 7

| Schritt: | Quelle 1: | Polung Quelle 1: | Quelle 2: | Polung Quelle 2: | Winkel B-Feld: | Kraft: |
|---|---|---|---|---|---|---|
| a) | OFF | | ON | positiv | 90° | 180° |
| b) | ON | positiv | ON | positiv | 135° | 225° |
| c) | ON | positiv | OFF | | 180° | 270° |
| d) | ON | positiv | ON | negativ | 225° | 315° |
| e) | OFF | | ON | negativ | 270° | 360° |
| f) | ON | negativ | ON | negativ | 315° | 45° |
| g) | ON | negativ | OFF | | 360° | 90° |
| h) | ON | negativ | OFF | positiv | 45° | 135° |

Fig. 8a

Fig. 8b

Fig. 9

Fig. 10a

Fig. 10b

Fig. 11

Fig. 12

Fig. 13

EP 3 178 597 B1

Fig. 14a

Fig. 14b

Fig. 14c

Fig. 14d

Fig. 14e

Fig. 14f

Fig 14g

Fig. 14h

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1418016 A2

- DE 102004051389 A1